Europäisches Patentamt

European Patent Office

Office européen des brevets

(11) Publication number : **0 579 510 A2**

# (12) EUROPEAN PATENT APPLICATION

(21) Application number : **93305616.0**

(22) Date of filing : **16.07.93**

(51) Int. Cl.⁵ : **C08F 10/06, C08F 4/651,
C08F 4/655**

(30) Priority : **17.07.92 JP 190987/92
29.06.93 JP 159694/93**

(43) Date of publication of application :
**19.01.94 Bulletin 94/03**

(84) Designated Contracting States :
**DE FR GB**

(71) Applicant : **MITSUBISHI KASEI
CORPORATION
5-2, Marunouchi 2-chome Chiyoda-ku
Tokyo (JP)**

(72) Inventor : **Uehara, Yumito
7030-5 Yaho
Kunitachi-shi, Tokyo (JP)**
Inventor : **Mizuta, Masao
3-5 Higashi-Tsubuura
Kurashiki-shi, Okayama-ken (JP)**
Inventor : **Kunitou, Youichi
3-1-200-1010 Hiroe
Kurashiki-shi, Okayama-ken (JP)**

(74) Representative : **Woods, Geoffrey Corlett
J.A. KEMP & CO. 14 South Square Gray's Inn
London WC1R 5LX (GB)**

(54) **Propylene polymers and process for preparing the same.**

(57)    A process for preparing a propylene polymer which comprises polymerizing propylene, and optionally a minor amount of another α-olefin, in the presence of a catalyst which comprises a mixture of :
(i) a propylene polymer-containing solid titanium trichloride containing 0.1 to 500 g of propylene polymer per gram of titanium trichloride, and
(ii) an organic aluminium compound (organic aluminium compound A) ;
wherein said propylene polymer-containing solid titanium trichloride is obtainable by contacting propylene with
(i) a solid titanium trichloride catalytic complex containing aluminium in an atomic ratio of 0.15 :1 or less relative to the titanium and a complexing agent, in the presence of
(ii) an organic aluminium compound (organic aluminium compound B), and
(iii) an aromatic carboxylate ester ; and a propylene polymer composition which consists essentially of :
(i) 100 parts by weight of a propylene polymer in which the weight percent of the polymer which dissolves in o-dichlorobenzene at temperatures between 120 and 135°C is at least the value calculated from equation (I) when the melt flow rate (MFR) of the polymer is equal to or less than 100 g/10 min., or calculated from equation (II) when the MFR of the polymer is more than 100 g/10 min. :
$$[40 - 15 \log(MFR)] \times 100 \quad (I)$$
$$[50 - 20 \log(MFR)] \times 100 \quad (II)$$
when the amount of the polymer dissolved in o-dichlorobenzene is measured at each temperature while continuously or stepwise raising the temperature of the o-dichlorobenzene ; and
(ii) 0.001 to 3 parts by weight of a nucleating agent.

EP 0 579 510 A2

The present invention relates to a propylene polymer and a process for the preparation thereof. More particularly, the invention relates to a propylene polymer and its composition having high crystallinity and rigidity which is prepared by using a solid titanium trichloride catalyst suitable for the polymerization of propylene.

In conventional processes for the polymerization of propylene, an increase in yield of a crystalline polymer, that is, improvement in stereoregularity of a polymer, has been very advantageous and important industrially, since not only a product having high rigidity and excellent properties can be obtained but also the unit requirement for starting propylene can be improved and the amount of non-crystalline polymers dissolved in a diluent can be decreased resulting in simplification or elimination of the steps for removing such non-crystalline polymers.

Recently, various processes have been proposed for polymerizing propylene with a highly active catalyst having a high catalytic efficiency. In these processes, however, it is difficult to obtain a polymer having a satisfactory bulk density and crystallinity with a good yield. It is still highly desirable to solve this problem.

To meet such a demand, Japanese Patent Publication (KOKOKU) No. 49-14865 (1974) proposed a method for increasing the bulk density and stereoregularity of a resulting polymer, wherein a catalyst system containing titanium trichloride and an organic aluminum compound is pretreated with propylene at a temperature lower than 60°C. After the pretreatment, the polymerization is carried out at an elevated temperature in order to achieve a high catalytic efficiency. Usually, the bulk density and stereoregularity of a resulting polymer may be abruptly decreased as the polymerization temperature rises. This decrease could be alleviated by the process disclosed in the Japanese KOKOKU. Thus, the bulk density and stereoregularity are relatively slowly reduced. However, this is still not satisfactory. In particular, only a small improvement can be provided at polymerization temperatures in the industrially practical range of 60 to 70°C. Further, the presence of a suitable amount of hydrogen is essential in the disclosed process to prevent fish eye from occurring in a shaped article produced from the resulting polymer. However, the control of the amount of hydrogen is often practically difficult to effect. Lower amounts of hydrogen may increase the fish eye in shaped articles; too much hydrogen may give a lower yield of the crystalline polymer. Moreover, even if suitable amounts of hydrogen and propylene are charged, the concentration of hydrogen may disadvantageously vary due to absorption of hydrogen by propylene.

Japanese Patent Application Laying-open (KOKAI) No. 51-108693 (1976) proposed a method for activating a catalyst for the polymerization of propylene wherein propylene is gradually absorbed in an inert solvent dispersion of an alkylaluminum chloride and a δ-titanium trichloride composition which is obtained by treating β-titanium trichloride containing $TiCl_3$-1/3 $AlCl_3$ or $AlCl_3$ with a complexing agent followed by grinding. However, the feeding rate of propylene to be absorbed cannot be increased sufficiently to effect the absorption within a reasonably short period of time. Further, the yield of crystalline polymers obtained is not satisfactorily high.

A number of proposals have been made to solve the above mentioned problems.

For instance, Japanese Patent Publication (KOKOKU) No. 56-22816 (1981) and No. 56-22817 (1981) disclose a method for pretreating the catalyst with propylene in the absence of hydrogen. Japanese Patent Application Laying-open (KOKAI) No. 53-10398 (1978) discloses a method for pretreating the catalyst with propylene in the presence of an electron donating substance. These methods can provide a high catalytic efficiency and a high yield of crystalline polymers and can be carried out at relatively high temperatures. Advantageously, shaped articles produced from the products of the methods have very few fish eyes. Thus, these methods are highly advantageous industrially.

Recently, however, the yield of a process for producing a polymer from the starting propylene has been increasingly expected to be further improved from the economical viewpoint. Thus, yields of crystalline polymers even as high as 99% would not be still satisfactory.

On the other hand, higher qualities, such as higher rigidity and heat resistance, have been demanded in certain applications of the propylene polymer, for example, those fields requiring ultra-thin and/or large shaped articles as well as food containers. Higher rigidity enables the production of thinner walled and/or larger articles. The food container applications also require higher rigidity to prevent the deposition of food dyes.

Polypropylenes have also been utilized commonly in industrial parts, for example, composite parts containing inorganic fillers, for automobiles and domestic electrical products. Generally, good rigidity, impact strength, heat resistance and/or appearance are required in these applications. In particular, incorporation of inorganic fillers, such as glass, mica, talc, etc., which are used to improve rigidity, may indeed improve the rigidity of materials but simultaneously increase the weight of products. Recently, weight reduction has been strongly demanded in the above mentioned industrial parts. It is desirable to provide higher rigidity by incorporating as small an amount of filler as possible. Thus, polypropylene resins having higher rigidity are necessitated.

With respect to the improvement of rigidity, Japanese Patent Publication (KOKOKU) No. 60-23764 (1985), No. 1-48922 (1989) and No. 3-61685 (1991) have proposed methods for polymerizing propylene in the presence of aromatic carboxylic acid esters. The resulting propylene polymers obtained by these proposed processes do not have satisfactorily high rigidity.

## SUMMARY OF THE INVENTION

The present inventors have made great efforts to solve the above mentioned problems and meet the requirements, and found that a polypropylene having a very high crystallinity, and unusual rigidity and heat resistance can be provided by polymerizing propylene by means of a catalytic system comprising an organic aluminum compound and a propylene polymer-containing solid titanium trichloride with a high catalytic efficiency, said propylene polymer-containing solid titanium trichloride being obtained by subjecting a certain solid titanium trichloride catalytic complex to a special treatment in the presence of an aromatic carboxylate ester.

Further, the present inventors have also found that in the thus prepared propylene polymer, the proportion of dissolved propylene polymer as fractionally extracted with o-dichlorobenzene has a relationship to the temperature and MFR (melt flow rate) and that the proportion of polymer fractionally extracted at a given MFR and temperatures above 120°C has at least a certain value.

Thus, the present invention have been attained.

Accordingly, in its first aspect, the present invention provides a process for preparing a propylene polymer comprising polymerizing propylene and optionally a minor amount of other α-olefin in the presence of a catalytic system which comprises a propylene polymer-containing solid titanium trichloride and an organic aluminum compound, wherein said propylene polymer-containing solid titanium trichloride contains 0.1 to 500 g of propylene polymer per gram of solid titanium trichloride and is produced by contacting propylene with a solid titanium trichloride catalytic complex in the presence of an organic aluminum compound and an aromatic carboxylate ester, said catalytic complex containing aluminum in an atomic ratio relative to titanium of 0.15 or less and a complexing agent.

Further, the present invention provides, in its second aspect, a propylene polymer composition consisting essentially of 100 parts by weight of a propylene polymer in which the weight percent of the propylene polymer dissolved in o-dichlorobenzene at temperatures between 120-and 135°C is at least the value calculated from the following equation (I):

$$[40 - 15 \log(MFR)] \times 100 \quad (I)$$

wherein MFR represents the melt flow rate of the propylene polymer with the value of MFR being equal to or less than 100 g/10 min., or from the following equation (II):

$$[50 - 20 \log(MFR)] \times 100 \quad (II)$$

with the value of MFR being more than 100 g/10 min., when the amount of the propylene polymer dissolved in o-dichlorobenzene is measured at each temperature while continuously or stepwise raising the temperature of o-dichlorobenzene; and 0.001 to 3 parts by weight of a nucleating agent.

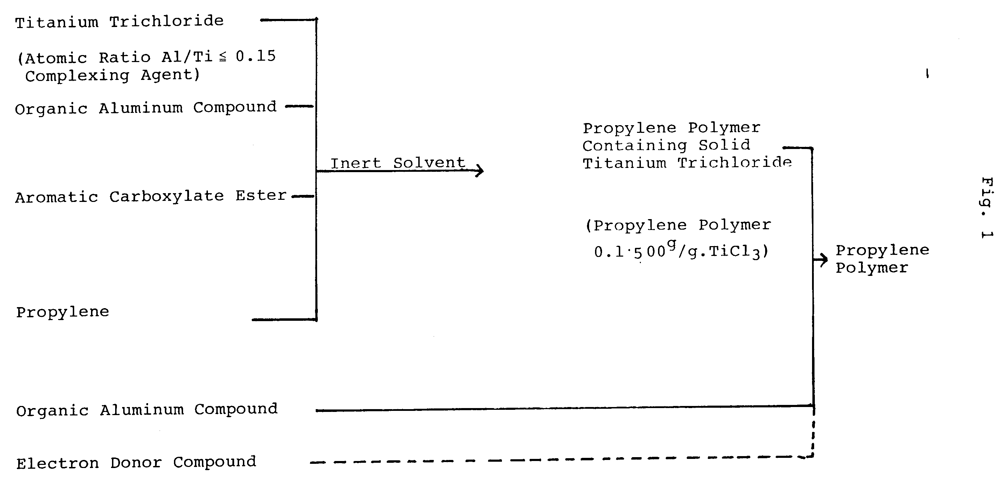

## BRIEF DESCRIPTION OF THE SOLE DRAWING

The attached sole drawing is a flow chart representing a process according to an embodiment of the present invention.

## DESCRIPTION OF THE INVENTION

Hereinafter the present invention will be described in detail.

The solid titanium trichloride catalytic complex employed in the invention contains aluminum and a complexing agent. The atomic ratio of aluminum to titanium is 0.15 or less, preferably 0.1 or less, more preferably 0.02 or less. The molar ratio of the complexing agent to titanium trichloride in the solid titanium trichloride catalytic complex is 0.001 or more, preferably 0.01 or more. Illustratively, the catalytic complex may contain titanium trichloride, an aluminum halide of the formula $AlR'_pX_{3-p}$ wherein R' is a hydrocarbon group having 1 to 20 carbon atoms, X is a halogen atom, and p is a number in the range of 0 to 2, the atomic ratio of aluminum to titanium in the titanium trichloride being 0.15 or less, and a complexing agent in a molar ratio relative to the titanium trichloride of 0.001 or more. For example, the catalytic complex may be represented by the formula:

$$TiCl_3 \cdot (AlR'_pX_{3-p})_s \cdot (C)_t$$

wherein R' is a hydrocarbon group having 1 to 20 carbon atoms, X is a halogen atom, p is a number in the range of 0 to 2, C is a complexing agent, s is a number of 0.15 or less, and t is a number of 0.001 or more. The catalytic complex may contain a minor amount of iodine, bromine which is substituted for a portion or all of the chlorine in the titanium trichloride, a solid inorganic carrier such as $MgCl_2$ or MgO, and/or an olefin polymer powder such as polyethylene or polypropylene. The complexing agent C may include ethers, thioethers, ketones, carboxylic acid esters, amines, carboxylic acid amides, and polysiloxanes. Ethers and thioethers are particularly preferred. The ethers or thioethers may be represented by the formula R"-O-R"' or R"-S-R"' wherein R" and R"' are independently hydrocarbon groups having 15 or less carbon atoms. The aluminum halide $AlR'_pX_{3-p}$ may be $AlCl_3$ or $AlR'Cl_2$ wherein R' is as defined above.

The solid titanium trichloride catalytic complex preferably the strongest halo at a position near 32.9° of 2θ in the X ray diffraction pattern, which corresponds to the position of the strongest peak in the X ray diffraction pattern for α-titanium trichloride. Further, the solid titanium trichloride catalytic complex preferably is not exposed to elevated temperatures above 150°C during the preparation thereof. Particularly preferred are those having very fine pores in which an accumulated volume of pores having a radius in the range of 20 to 500 Å is 0.02 cm$^3$/g or more, particularly 0.03 to 0.15 cm$^3$/g, as measured by a mercury porosimeter. The use of such a catalytic complex can eliminate the removal of non-crystalline polymers.

The solid titanium trichloride catalyst complex may be easily prepared by (a) liquidizing titanium trichloride in the presence of an ether or thioether followed by precipitating therefrom at a temperature of 150°C or lower; or (b) reducing titanium tetrachloride with an organic aluminum compound or metallic aluminum followed by treating the resulting solid titanium trichloride with a complexing agent and a halide compound.

In the process (a) above, a method for liquidizing titanium trichloride may involve (A) reducing titanium tetrachloride as a starting material with an organic aluminum compound in the presence of an ether-or thioether and, if necessary, an appropriate hydrocarbon solvent; or (B) treating a solid titanium tetrachloride as a starting material with an ether or thioether, if necessary, in the presence of an appropriate hydrocarbon solvent.

Methods for precipitating a finely granular solid titanium trichloride catalytic complex are not particularly limited. The liquidized material may be heated, either directly or, if necessary, after diluted with a hydrocarbon solvent, to a temperature of 150°C or lower, preferably in the range of 40 to 120°C, particularly 60 to 100°C to effect precipitation. When the total molar amount of titanium and aluminum in the material containing titanium trichloride is less than that of ether or thioether, such a substance as titanium tetrachloride or an aluminum halide, e.g., an aluminum trihalide or alkylaluminum dihalide may be added to promote the precipitation. The amount of such a substance used is preferably at most 5 times by mole that of titanium in the liquidized material.

The complexing agent used in the process (b) may include those listed above for the complexing agent C. The halide compound may include titanium tetrachloride and carbon tetrachloride. The treatments with the complexing agent and the halide compound may be carried out simultaneously; or alternatively, the treatment with the complexing agent may be followed by the halide compound treatment. Usually, the complexing agent is added to the solid titanium trichloride in a diluent in an amount of 0.2 to 3 times by mole that of $TiCl_3$ and the treatment is carried out at a temperature in the range of -20 to 80°C. After the treatment with the complexing agent, the resulting solid materials are preferably separated and washed. The treatment with the halide compound is generally carried out in a diluent at a temperature in the range of -10 to 50°C. The amount of halide compound used is generally 0.1 to 10 times by mole, preferably 1 to 5 times by mole, based on $TiCl_3$. After the halide compound treatment, the resulting solid materials are preferably separated and washed.

Methods for preparing these solid titanium trichloride catalytic complexes are illustrated in Japanese Patent Publication (KOKOKU) No. 55-8452 (1980), No. 55-8451 (1980), No. 55-8452 (1980), No. 55-8003 (1980), No. 54-41040 (1979), and No. 55-8931 (1980), as well as Japanese Patent Application Laying-open (KOKAI) No. 58-36928 (1983), No. 59-12905 (1984) and No. 59-13630 (1984).

According to the present invention, the thus obtained solid titanium trichloride catalytic complex is mixed with an organic aluminum compound and an aromatic carboxylate ester in an inert solvent and contacted with propylene. The organic aluminum compound used as a co-catalyst may include those represented by the general formula $AlR^4_mX_{3-m}$ wherein $R^4$ is a saturated or unsaturated hydrocarbon group having 1 to 20 carbon atoms, X is a halogen atom, and m is a number in the range of 1.5 to 3. Illustrative examples the alkylaluminum halides include dimethylaluminum chloride, diethylaluminum chloride, diethylaluminum bromide, ethylaluminum sesqui-chloride, and mixtures thereof. Among these, dialkylaluminum halides are preferred with diethylaluminum chloride being particularly preferred.

The aromatic carboxylate esters used in the invention may include alkyl benzoates such as methyl, ethyl, propyl, and butyl benzoates; alkyl toluates such as methyl, ethyl, propyl, and butyl toluates; alkyl ethylbenzoates such as methyl and ethyl ethylbenzoates; alkyl xylenecarboxylates such as ethyl xylenecarboxylate; alkyl anisates such as ethyl anisate; alkoxy substituted benzoates such as methyl and ethyl ethoxybenzoates; dialkyl phthalates such as dimethyl, diethyl, dibutyl and dioctyl phthalates; alkyl naphthoates such as methyl, ethyl, propyl, and butyl naphthoates; and alkyl anthracenecarboxylates such as methyl and ethyl anthracenecarboxylates. Particularly preferred are ethyl benzoate, methyl toluate, and dibutyl phthalate. One of the important features of the present invention is that surprisingly high rigidity and heat resistance can be achieved by the use of the above mentioned specific aromatic carboxylate esters.

The inert solvents used to mix the solid titanium trichloride catalytic complex, organic aluminum compound, and aromatic carboxylate ester may be the same as or different from those used in the preparation of the solid titanium trichloride catalytic complex. These solvents may include inert aliphatic, cycloaliphatic and aromatic hydrocarbons which are commonly used in the polymerization of olefins. Preferred solvents are n-hexane, n-heptane, cyclohexane, benzene, and toluene.

It is not necessary to preliminarily react the organic aluminum compound and aromatic carboxylate ester prior to mixing with the solid titanium trichloride catalytic complex. The organic aluminum compound, aromatic carboxylate ester, and solid titanium trichloride may be simultaneously mixed with each other.

The amount of the solid titanium trichloride catalytic complex dispersed in the inert solvent is not particularly limited but may preferably be within a certain range of concentration. Generally, the amount is in the range of 1 to 100 g of titanium trichloride, preferably 5 to 50 g of titanium trichloride, in one liter of the inert solvent. Smaller amounts are disadvantageous since a reaction vessel required to do this operation is too large in volume. If the amount is too high, some heterogeneous reactions may take place due to poor mixing and thus the advantageous effects of the invention cannot be achieved. Generally, as high a concentration as possible is chosen from the concentration range within which adequate mixing by stirring is carried out.

The amount of the organic aluminum compound used is generally 0.1 to 10 mole, preferably 0.2 to 2 mole, per mole of the solid titanium trichloride.

The amount of the aromatic carboxylate ester used is very important in order to provide the advantageous effects of the invention. Generally, the amount used is 0.01 to 1 mole, preferably 0.02 to 0.5 mole, per mole of the solid titanium trichloride. When the amount is too high, the resulting propylene polymer-containing solid titanium trichloride may have a low catalytic activity for the polymerization of propylene. With too low amounts, the advantageous effects of the invention cannot be achieved.

The temperature at which propylene is injected into the inert solvent containing the solid titanium trichloride catalytic complex, organic aluminum compound and aromatic carboxylate ester may not be particularly limited but should be lower than that of the subsequent polymerization. The temperature is generally in the range of -10 to 70°C, preferably 5 to 60°C, more preferably 25 to 50°C. When the temperature is too high, the yield of crystalline polymers is not effectively improved in the subsequent polymerization where propylene is polymerized by means of the resulting catalyst comprising the propylene polymer-containing solid titanium trichloride. If this operation temperature is too low, the difference between this temperature and the temperature of the cooling water for the reaction vessel is small and this is industrially disadvantageous from the viewpoint of heat removal.

In the process of the invention, propylene is introduced into the liquid or gaseous phase in the reaction vessel containing a mixture which comprises the solid titanium trichloride catalytic complex, inert solvent, organic aluminum compound, and aromatic carboxylate ester. The hourly rate of introducing propylene is generally 0.1 to 10 kg, preferably 0.2 to 5 kg, per kg of the solid titanium trichloride catalytic complex. If the introduction rate is too high, it is difficult to control the reaction temperature. Too low rates will necessitate longer periods of time required for the reaction and thus is not preferred from the industrial viewpoint.

When propylene is contacted with the solid titanium trichloride catalytic complex, propylene polymer is produced in an amount of 0.1 to 500 g, preferably 0.1 to 100 g, more preferably 0.2 to 10 g, per gram of the solid titanium trichloride. When the amount of propylene polymer produced is too low, the advantageous effects of the invention cannot be achieved. On the other hand, too large amounts will necessitate a larger volume of the reaction vessel required and is disadvantageous industrially.

According to the invention, the presence of hydrogen is not necessary during the propylene contacting operation. Thus, shaped articles without fish eye can be obtained from the resulting polymer produced in the subsequent polymerization using the catalyst prepared in the absence of hydrogen. However, hydrogen may be present during the propylene contact operation and this is included within the scope of the invention.

In the invention, a minor amount of other olefin such as ethylene, butene-1, or 4-methylpentene-1 may be used together with propylene.

Although the thus prepared propylene polymer-containing solid titanium trichloride may be directly used in the subsequent polymerization as a slurry comprising unreacted materials and inert solvent, the catalyst is usually separated from the liquid phase by a suitable means such as decantation, filtration, or centrifugation, and washed with a solvent for several times. The solvent used may be advantageously the inert hydrocarbon solvent used in the aforementioned propylene contacting operation.

In the invention, the propylene polymer-containing solid titanium trichloride thus obtained is used as a catalyst in the subsequent polymerization of propylene after adding thereto an organic aluminum compound.

The co-catalyst, organic aluminum compound added in the polymerization may be the same as those which are mentioned with respect to the pretreatment and represented by the above described general formula. Preferably, the compounds are represented by the general formula:

$$AlR^5_nCl_{3-n}$$

wherein $R^5$ is a hydrocarbon group having 1 to 20 carbon atoms, and n is a number in the range of 1.9 to 2.1.

Those compounds of the formula wherein $R^5$ is n-propyl or n-hexyl group may be preferably used, although diethylaluminum chloride, i.e., $R^5$ is ethyl group and n is 2, can be used in the invention.

The amount of the organic aluminum compound used is generally 0.1 to 100 times by mole, preferably 2 to 10 times by mole, that titanium trichloride in the propylene polymer-containing catalyst.

According to the invention, the catalyst comprising the propylene polymer-containing solid titanium trichloride and organic aluminum compound may provide a significantly high yield of crystalline polymer in the polymerization of propylene. A known substance such as an electron donor compound or aromatic compound may also be formulated into the catalyst system to further improve the polymerization reaction, for example, to increase the yield of polymer.

The propylene polymer-containing solid titanium trichloride and organic aluminum compound and optionally the other component(s) are simply mixed with each other in any conventional manner to use in the polymerization. The main polymerization of propylene may be carried out by conventional slurry or gas phase polymerization. The polymerization may be either continuous or batchwise. The polymerization reaction may be effected at a pressure of 1 to 100 atmospheres, preferably 5 to 40 atmospheres, and a temperature of 50 to 90°C, preferably 60 to 75°C. The medium for slurry polymerization may be the same as those used in the above mentioned pretreatment of titanium trichloride and illustratively include hydrocarbons such as hexane, heptane, cyclohexane, benzene, toluene, pentane, butane and propane. The medium may also be propylene per se. Any known molecular weight controlling agent such as hydrogen or diethylzinc may optionally be used in the polymerization reaction to control the molecular weights of the resulting polymers.

The monomer to be polymerized by the process of the invention may be propylene or a mixture of propylene and other $\alpha$-olefin(s). The other $\alpha$-olefin(s) may be ethylene, butene-1, or 4-methylpentene-1 as in the aforementioned pretreatment. The amount of other olefin(s) used is such a minor amount that the resulting polymers should have the properties for polypropylenes, and may be at most 30% by weight, preferably under 20% by weight, based on propylene used as a monomer.

According to the invention, so-called propylene-ethylene block copolymers can suitably be prepared in two- or more-stage polymerization, for example, by first producing a propylene homopolymer or a copolymer of propylene and a minor amount of other $\alpha$-olefin(s) and then polymerizing propylene and/or other $\alpha$-olefin(s) in the presence of the previously produced propylene polymer.

Commonly used methods are conveniently used to prepare the propylene-ethylene block copolymers. In general, the polymerization temperature, time and other conditions are selected such that the propylene polymer produced in the first stage comprises 60 to 95% by weight of the total block copolymer. The temperature is generally in the range of 40 to 100°C, preferably 50 to 80°C. The polymerization temperature and the amount of molecular weight controlling agent used are selected such that the product has a melt flow index (MFI) of 1 to 150 g/10 min as measured under 2.16 kg at 230°C according to ASTM D1238-70. The molecular weight controlling agent may be hydrogen or a dialkylzinc with hydrogen being preferred. In the second stage of polymerization, propylene and ethylene are copolymerized in the presence of the homo- or copolymer of propylene produced in the first stage.

The polymerization may be carried out by conventional slurry polymerization, bulk polymerization in liquid propylene, or gas phase polymerization, or any combination thereof. The polymerization may be either continuous or batchwise.

According to the process of the invention using the propylene polymer-containing solid titanium trichloride as a catalyst component, propylene may be polymerized to give a polymer with a very high crystallinity, and surprisingly high rigidity and heat resistance.

The propylene polymer according to the present invention may be a propylene homopolymer or a copolymer of propylene and a minor amount, generally 0.1 to 5% by weight, of other $\alpha$-olefin(s). When the propylene polymer is fractionally extracted with o-dichlorobenzene, the weight percent of propylene polymer dissolved in o-dichlorobenzene at a given MFR and at 120°C and higher temperatures is larger as compared with conventional propylene polymers. Thus, when MFR is equal to or less than 100 g/10 min., the weight percent has at least the value calculated from the following equation (I):

$$[40 - 15 \log(MFR)] \times 100 \quad (I)$$

preferably the following equation (II):

$$[50 - 20 \log(MFR)] \times 100 \quad (II)$$

wherein MFR represents the melt flow rate of the propylene polymer. When MFR is more than 100 g/10 min., the weight percent has at least the value calculated from the equation (II), preferably the equation (I).

Processes for preparing the propylene polymers of the invention are not particularly limited so long as polymers having the above mentioned properties may be obtained. The process according to the first aspect of the present invention is preferred.

In the present invention, among those propylene polymers with the weight percent thereof dissolved in o-dichlorobenzene at 120°C or higher temperatures being at least the value calculated from the above described equation (I) or (II), practically preferred are those having MFR of 0.1 to 500 g/10 min., preferably 0.1 to 100 g/10 min. and a flow ratio (FR) of 40 to 100, preferably 40 to 80.

Further, those propylene polymers having a ratio of the weight percent of propylene polymer dissolved in o-dichlorobenzene at temperatures between 40 and 120°C to the weight percent of propylene polymer dissolved in o-dichlorobenzene at temperatures between 120 and 135°C of at least 1:0.25, preferably 1:0.3-2.0 are particularly preferred from the viewpoint of physical properties, such as high rigidity and excellent heat distortion temperature.

The fractional measurement of propylene polymer dissolved in o-dichlorobenzene may be carried out in the following manner:

A glass bead carrier of 50 to 400 mesh is filled into a fractional column of 5 to 20 cm in length and 0.2 to 1 cm in inner diameter and a sample of polymer dissolved in o-dichlorobenzene (1 to 4 mg/ml) is charged into the column and retained therein. The temperature is lowered to 40°C at a rate of 0.1 to 2°C per minute to precipitate the polymer on the carrier. Then, an amount of polymer eluted with o-dichlorobenzene eluent is measured at each temperature while the temperature is raised, usually stepwise by a given value. The amount of eluted polymer may be calculated from a peak area of a chromatogram of molecular weight distribution which is obtained in a molecular weight distribution analyzer using an infrared detector (3.42 $\mu$m) and o-dichlorobenzene in an amount about 2 times as large as the effective volume of the fractional column.

The thus measured amounts of polymer dissolved in o-dichlorobenzene at 120°C or higher temperatures may vary with the MFR of the propylene polymer and the stereoregularity of the propylene polymer as measured by xylene-insoluble contents or $^{13}$C-NMR. Generally, the lower MFR the more amounts dissolved, while the higher MFR the smaller amounts. On the other hand, the higher stereoregularity the more amounts dissolved, while the lower the smaller.

According to the present invention, the amount of the propylene polymer with a given MFR and given stereoregularity which is dissolved in o-dichlorobenzene at 120°C or higher temperatures is higher and the rigidity and heat properties of the present propylene polymer are improved, as compared with conventional propylene polymers. In general, if the propylene polymers have an MFR in the above specified range and a dissolved amount of 20 to 60% by weight at 120°C or higher, the rigidity thereof is in the range of 20,000 to 25,000 kg/cm2 and a heat distortion temperature (HDT) is in the range of 125 to 140°C.

In the present invention, a propylene polymer composition having improved crystallinity and higher rigidity can be obtained by adding 0.001 to 3 parts by weight of a nucleating agent to 100 parts by weight of the propylene polymer of the invention.

The nucleating agent may include those commonly used, such as aluminum or sodium salts of aromatic carboxylic acids, metal salts of aromatic phosphoric acids, and sorbitol derivatives. Inorganic fillers, such as talc, calcium carbonate and mica, may also be used herein. In addition, higher molecular weight nucleating agents, such as 3-methylbutene-1 polymers, proposed in Japanese Patent Application Laying-open (KOKAI) No. 62-275111 (1987), No. 1-126306 (1989), No. 1-156305 (1989), No. 1-229056 (1989), No. 1-318011 (1989), and 4-272908 (1992) can be used in the invention. Among these nucleating agents, an aluminum salt of an aromatic carboxylic acid, a metal salt of an aromatic phosphoric acid, a sorbitol derivative or talc may be preferably used herein.

Further, shaped articles with thinner walls can be produced from the propylene polymers of the invention and therefore the present propylene polymers may be particularly suitable for large sized articles. Accordingly, the invention also relates to an injection molded article.

EXAMPLES

The invention will hereinafter be illustrated by the following examples but is not limited thereto.
Methods used in the examples for measuring various physical properties are as follows:

(1) Catalytic efficiency:

The amount (gram) of polymer produced per gram of titanium trichloride.

(2) Isotactic index ($II_{XLN}$, % by weight):

About 2 g of a sample powder is weighed, completely dissolved in 400 ml of xylene at 140 to 145°C, and allowed to stand at 25°C for 3 hours. The resulting precipitate is then filtered and dried. The weight percent of the precipitate is calculated based on the total sample.

(3) Melt flow rate (MFR, g/10 min):

According to JIS K6758, the amount of polymer extruded at 230°C under a load of 2.16 kg is measured by the method of JIS K7210.

(4) Heat of crystallization ($\Delta H_u$, J/g):

Using Perkin Elmer DSC-7, 10 mg of a sample is heated at a rate of 10°C per minute from 323°K to 473°K, held at 473°K for 5 minutes, and cooled at a rate of 10°C per minute to 323°K, and held for 5 minutes. The sample is again heated at a rate of 10°C per minute to 473°K while the heat absorbed during this heating step is measured (heat of fusion, i.e., heat of crystallization).

(5) Flexural strength (FS) and flexural modulus (FM):

These flexural properties are measured using a pressed piece of 25 x 80 x 3.2 mm in dimensions with a distance between support points of 51 mm at a bending rate of 2.0 mm per minute at 23°C according to JIS K7203.

(6) Heat distortion temperature (HDT, °C):

HDT is measured using a pressed piece of 25 x 80 x 3.2 mm in dimensions with a bending stress of 4.6 kgf/cm$^2$, a deflection of 0.25 mm and a heating rate of 2°C per minute according to JIS K7206.

(7) Fractionation method:

The fractionation is carried out in the following manner using Cross Fractionation Chromatograph, CFC T-102L, Mitsubishi Petrochemical Company, Ltd., Japan:

Glass beads of 0.1 mm in diameter are filled over the full length of a stainless steel tube of 15 cm in length and 0.46 cm in inner diameter to prepare a fractionation column. The column is held at 135°C and 0.5 ml of a sample of polymer dissolved in o-dichlorobenzene at about 135°C in a concentration of 2 mg/ml is supplied and retained in the column. The column is then cooled to 40°C at a rate of 1°C per minute to precipitate the polymer onto the glass beads in the column. The fractionation column is held at 40°C and o-dichlorobenzene at 40°C is passed through the column at a flow rate of 1 ml per minute over 2 minutes to elute a proportion of polymer soluble in the solvent. The resulting eluate is introduced into a molecular weight distribution analyzer using an infrared detector (3.42 µm) to measure the molecular weight distribution of polymer. Thereafter, o-dichlorobenzene whose temperature is raised by 5°C is supplied to the column and this procedure is repeated until 135°C to measure extracted amounts of polymer at respective temperatures.

(8) Flow Ratio (FR):

A melt indexer (Takara Kogyo, Japan) is used to measure amounts of polymer extruded at 230°C. The flow ratio (FR) is defined as a weight ratio of the amount extruded under a load of 5530 g to that extruded under 553 g.

Examples 1 and 2

(a) Preparation of solid titanium trichloride:

To an autoclave of 10 liters in volume which had been thoroughly substituted with nitrogen, 5.15 liters of purified toluene was charged at room temperature and then 651 g (5.0 mole) of n-butylether, 949 g (5.0 mole) of titanium tetrachloride and 286 g (2.4 mole) of diethylaluminum chloride were added while stirring. The resulting uniform brown solution was heated to 40°C. After 30 minutes, fine violet granules started to precipitate. The reaction mixture was allowed to stand at 40°C for further 2 hours. Then, 450 g of TiCl$_4$ was further added and the mixture was heated to 96°C. After the mixture was held at 96°C for about 1 hour, violet granules were separated, and washed with n-hexane to give about 800 g of solid titanium trichloride.

(b) Preparation of propylene polymer-containing solid titanium trichloride (Pretreatment):

To a 10 liter autoclave thoroughly substituted with nitrogen, 5 liters of purified n-hexane was charged, and 195 g of diethylaluminum chloride, the solid titanium trichloride obtained in (a) above which contained 250 g (1.62 mole) of $TiCl_3$, and 73 g (0.48 mole) of methyl toluate were added. While the temperature was held at 40°C, 250 g of propylene gas was blown into the liquid phase over about 1 hour.

The reaction mixture was allowed to stand to precipitate solid materials and the supernatant was removed by decantation. The solid materials were washed with n-hexane for several times to obtain propylene polymer-containing solid titanium trichloride. The amount of propylene thus prepolymerized was 1 g per gram of titanium trichloride.

(c) Polymerization of propylene:

To a 2 liter autoclave thoroughly dried and substituted with nitrogen, 1500 ml of liquidized propylene, 125 mg of diethylaluminum chloride, the propylene polymer-containing solid titanium trichloride obtained in (b) above which contained 20 mg (0.13 mmole) of $TiCl_3$, and 1.4 kg/cm$^2$ of hydrogen were charged. In Example 2, 5.83 mg of methyl toluate was further used and polymerization was carried out at 70°C for 3 hours. After polymerization, unreacted monomers were purged out and the content of the autoclave was removed out and dried to give white powdery propylene polymer.

The properties of this polymer are shown in Table 1 below.

Comparative Example 1

The procedures of Example 2 were repeated except that no methyl toluate was added in the step (b) of Example 1. The results are shown in Table 1 below.

It can be seen from the comparison between Example 1 and Comparative Example 1 that the rigidity and heat distortion temperature were remarkably improved in Example 1 although II$_{XLN}$ was not significantly improved.

Comparative Example 2

The procedures of Example 1 were repeated except that methyl toluate was replaced by methyl methacrylate in the pretreatment. The results are shown in Table 1 below.

It can be seen from the comparison between Example 1 and Comparative Example 2 that although some improvement in II$_{XLN}$ was achieved by methyl methacrylate, the rigidity and heat resistance were not significantly improved in Comparative Example 2. Thus, surprisingly improved rigidity and heat resistance are provided by the present invention.

Example 3

The procedures of Example 2 were repeated except that the amount of methyl toluate was reduced to 36.5 g (0.24 mole) in the step (b) of Example 1 to prepare the propylene polymer-containing solid titanium trichloride.

The properties of the resulting propylene polymer are shown in Table 1.

Example 4

The procedure of Example 2 were repeated except that methyl toluate was replaced by 73 g of ethyl benzoate in step (b) of Example 1 to polymerize propylene.

The results are shown in Table 1 below.

Example 5

The procedures of Example 1, (a) and (b) were repeated to prepare the solid titanium trichloride and the propylene polymer-containing titanium trichloride. A propylene-ethylene block copolymer was prepared in the following manner:

(c) Preparation of propylene block copolymer:

To a 2 liter induction stirring autoclave substituted with dry nitrogen, 5 mmole of diethylaluminum monochloride as a co-catalyst, 0.3 mmole of methyl toluate as a ternary component, 1.4 kg/cm$^2$ of hydrogen gas, and 700 g of liquidized propylene were charged. The autoclave was heated to 70°C. At this point, the propylene polymer-containing solid titanium trichloride obtained in (b) above which contained 25 mg of TiCl$_3$ was introduced by means of nitrogen under pressure to initiate polymerization reaction.

After 3 hours, unreacted propylene was rapidly purged out and 50 g of the resulting polymer powder was taken as a sample under purified nitrogen environment.

Subsequently, hydrogen gas was blown at 1.8 kg/cm$^2$ into the reaction vessel. When the temperature reached 60°C, a mixed propylene-ethylene gas was fed into the reaction vessel. The composition of the gas phase was held at a molar ratio of propylene to propylene plus ethylene of 65% by mole. The gas phase reaction was continued at 60°C for 90 minutes while the pressure was held at 15 kg/cm$^2$ G.

After the reaction was completed, unreacted monomer gas was purged out and 348 g of powdery polypropylene block copolymer was collected.

The results are shown in Table 1 below.

Comparative Example 3

The procedures of Example 5 were repeated except that the propylene polymer-containing titanium trichloride obtained in Comparative Example 1 was used to prepare a propylene-ethylene block copolymer.

The results are shown in Table 1 below.

It can be seen from the comparison between Example 5 and Comparative Example 3 that the rigidity of the propylene-ethylene block copolymer can also be significantly improved by the present invention.

Table 1

| | Catalytic Efficiency (g·PP/ g·TiCl$_3$) | MFR (g/10 min.) | II$_{XLN}$ (wt %) | $\Delta H_u$ ( J/g ) | FM (kg/cm$^2$) | FS (kg/cm$^2$) | HDT (°C) |
|---|---|---|---|---|---|---|---|
| Ex. 1 | 13,000 | 12 | 98.2 | 97.0 | 22,500 | 618 | 132.0 |
| 2 | 11,500 | 11 | 98.7 | 99.1 | 22,800 | 621 | 132.0 |
| 3 | 14,000 | 12.5 | 98.5 | 96.3 | 22,000 | 615 | 131.0 |
| 4 | 12,000 | 13.5 | 98.5 | 95.9 | 22,300 | 626 | 130.6 |
| 5 | – | 15 | – | 92.5 | 19,500 | 490 | – |
| Comp. Ex. 1 | 14,000 | 12.5 | 98.0 | 96.1 | 20,300 | 608 | 131.0 |
| 2 | 13,000 | 13.0 | 98.1 | 93.0 | 20,000 | 580 | 130.0 |
| 3 | – | 15 | – | 91.8 | 15,900 | 490 | – |

Examples 6 to 8

According to the procedures of Example 1 (a) and (b), solid titanium trichloride and propylene polymer-containing solid titanium trichloride were prepared.

(c) Polymerization of propylene:

To a 2 liter autoclave thoroughly dried and substituted with nitrogen, 1.5 liter of liquidized propylene, 125 mg of diethylaluminum chloride, the propylene polymer-containing solid titanium trichloride obtained in (b) above which contained 20 mg (0.13 mmole) of $TiCl_3$, and 0.8 kg/cm$^2$ (Example 6), 1.2 kg/cm$^2$ (Example 7) and 3.5 kg/cm$^2$ (Example 8) of hydrogen were charged and polymerization was carried out at 70°C for 3 hours.

After polymerization, unreacted monomer gas was purged out and the content of the autoclave was removed out and dried to give white powdery propylene polymer. The properties of this polymer are shown in Table 2 below.

Comparative Example 4

The procedures of Example 6 were repeated except that no methyl toluate was added in the step (b) of Example 6. The results are shown in Table 2 below.

Example 9

To a 2 liter induction stirring autoclave substituted with dry nitrogen, 1.3 mmole of diethylaluminum monochloride as a co-catalyst, 0.068 mmole of methyl toluate as a ternary component, 4.5 kg/cm$^2$ of hydrogen, and 700 g of liquidized propylene were charged.

The autoclave was heated to 70°C. At this point, the propylene polymer-containing solid titanium trichloride obtained in Example 6 (b) which contained 35 mg of $TiCl_3$ was introduced by means of nitrogen under pressure to initiate polymerization reaction. After 0.5 hour reaction, unreacted propylene was rapidly purged out and a sample of the resulting polymer powder was taken out under purified nitrogen environment. The MFR of the sample was 400 g/10 min.

Subsequently, 0.2 kg/cm$^2$ of hydrogen and 700 g of liquidized propylene were charged into this reaction system. The temperature of the system was rapidly raised to 70°C and polymerization reaction was carried out for 2.5 hours. After the reaction was completed, unreacted monomers were purged out to give 320 g of powdery polypropylene. The proportion of the second stage polymer in the whole polymer obtained was 84% by weight. The properties of the polymer are shown in Table 2.

## Table 2

| | Properties of Polymer | | | | | | | |
|---|---|---|---|---|---|---|---|---|
| | MFR (g/10 min.) | $II_{XLN}$ (WT %) | Δ Hu (J/g) | FM (Kg/cm$^2$) | HDT (°C) | FR | Eluate above 120°C (WT %) | Above 120°C / Below 120°C |
| Ex. 6 | 5 | 98.5 | 96.5 | 21,000 | 133 | 55 | 48 | 0.92 |
| 7 | 15 | 98.2 | 97.5 | 22,000 | 133 | 55 | 32 | 0.47 |
| 8 | 50 | 98.1 | 99.1 | 23,000 | 133 | 52 | 28 | 0.39 |
| 9 | 11 | 98.1 | 98.5 | 23,000 | 134 | 62 | 30 | 0.43 |
| Comp. Ex. 4 | 10 | 98.3 | 94.0 | 19,500 | 130 | 37 | 18 | 0.22 |

Example 10 and Comparative Example 5

To each of the propylene polymer powders obtained in Examples 1 to 9 and Comparative Examples 1 to 4, 0.1 % by weight of calcium stearate (Tan-nan Kagaku, Japan), 0.1% by weight of Irganox 1010 (Nippon Ciba-Geigy, Japan), 0.1% by weight of BHT (Yoshitomi Seiyaku, Japan), and 0.2% by weight of ALPTBBA (aluminum hydroxy-dip-tert-butylbenzoate, Shell Chemical) as a nucleating agent were added, and extruded in 20 mm extruder to yield pellets.

Then, the pellets were used to measure flexural strength, flexural modulus and heat distortion temperature. The results are shown in Tables 1 and 2 above.

According to the present invention, the rigidity of the resulting polymer can be surprisingly improved while its high stereoregularity is maintained. Thus, the process of the invention is very useful industrially.

## Claims

1. A process for preparing a propylene polymer which comprises polymerizing propylene, and optionally a minor amount of another $\alpha$-olefin, in the presence of a catalyst which comprises a mixture of:
   (i) a propylene polymer-containing solid titanium trichloride containing 0.1 to 500 g of propylene polymer per gram of titanium trichloride, and
   (ii) an organic aluminium compound (organic aluminium compound A);
   wherein said propylene polymer-containing solid titanium trichloride is obtainable by contacting propylene with:
   (i) a solid titanium trichloride catalytic complex containing aluminium in an atomic ratio of 0.15:1 or less relative to the titanium and a complexing agent, in the presence of
   (ii) an organic aluminium compound (organic aluminium compound B), and
   (iii) an aromatic carboxylate ester.

2. A process according to claim 1 wherein the resulting propylene polymer has a flexural modulus of 15,000 to 30,000 kg/cm².

3. A process according to claim 1 or 2 wherein the molar ratio of the organic aluminium compound B to the solid titanium trichloride catalytic complex is 0.1:1 to 10:1.

4. A process according to any one of the preceding claims wherein the molar ratio of the aromatic carboxylate ester to the solid titanium trichloride catalytic complex is 0.01:1 to 1.0:1.

5. A process according to any one of the preceding claims wherein the solid titanium trichloride catalytic complex, the organic aluminium compound B and the aromatic carboxylate ester are simultaneously mixed and subsequently contacted with propylene to produce the propylene polymer-containing solid titanium trichloride.

6. A process according to any one of the preceding claims wherein the weight percent of the resulting propylene polymer which dissolves in o-dichlorobenzene at temperatures between 120 and 135°C is at least the value calculated from equation (I) when the melt flow rate (MFR) of the polymer is equal to or less than 100 g/10 min., or calculated from equation (II) when the MFR of the polymer is more than 100 g/10 min.:

$$[40 - 15 \log(MFR)] \times 100 \quad (I)$$
$$[50 - 20 \log(MFR)] \times 100 \quad (II)$$

   when the amount of the polymer dissolved in o-dichlorobenzene is measured at each temperature while continuously or stepwise raising the temperature of the o-dichlorobenzene.

7. A propylene polymer composition which consists essentially of:
   (i) 100 parts by weight of a propylene polymer in which the weight percent of the polymer which dissolves in o-dichlorobenzene at temperatures between 120 and 135°C is at least the value calculated from equation (I) when the melt flow rate (MFR) of the polymer is equal to or less than 100 g/10 min., or calculated from equation (II) when the MFR of the polymer is more than 100 g/10 min.:

$$[40 - 15 \log(MFR)] \times 100 \quad (I)$$
$$[50 - 20 \log(MFR)] \times 100 \quad (II)$$

   when the amount of the polymer dissolved in o-dichlorobenzene is measured at each temperature while continuously or stepwise raising the temperature of the o-dichlorobenzene; and
   (ii) 0.001 to 3 parts by weight of a nucleating agent.

8. A composition according to claim 7 which has an MFR of 0.1 to 100 g/10 min. and a flow ratio (FR) of 40:1 to 80:1.

9. A composition according to claim 7 or 8 in which the ratio of the weight percent of the polymer which dissolves in o-dichlorobenzene at temperatures between 40 and 120°C and between 120 and 135°C is 1:0.3 to 1:2.0.

10. An article obtained by injection molding a composition as defined in any one of claims 7 to 9.

11. A process according to any one of claims 1 to 6 which further comprises injection molding the polymer into an article.

Titanium Trichloride

(Atomic Ratio Al/Ti ≤ 0.15
 Complexing Agent)

Organic Aluminum Compound

Aromatic Carboxylate Ester

Inert Solvent →

Propylene

Propylene Polymer
Containing Solid
Titanium Trichloride

(Propylene Polymer
$0.1 \cdot 500^{g}/g.TiCl_3$)

→ Propylene
  Polymer

Organic Aluminum Compound

Electron Donor Compound

Fig. 1

EP 0 579 510 A2